# FASCICULE DE BREVET EUROPEEN

(11) **EP 3 245 025 B1**
(45) Date de publication et mention de la délivrance du brevet: **09.10.2019**
(21) Numéro de dépôt: 16703572.4
(22) Date de dépôt: 14.01.2016
(51) Int. Cl.: B23Q 11/00, B08B 15/04

(54) **DISPOSITIF DE RÉTENTION DES POUSSIÈRES ISSUES D'UNE OPÉRATION DE PERÇAGE, ET PROCÉDÉ DE PERÇAGE D'UNE PAROI METTANT EN OEUVRE LEDIT DISPOSITIF DE RÉTENTION**
BORHSTAUBSAMMLER UND DIESES GERÄT BEINHALTENDES WANDBOHRVERFAHREN
DRILLING DUST RETENTION DEVICE AND WALL DRILLING PROCESS IMPLEMENTING SAID RETENTION DEVICE

(30) Priorité: 16.01.2015 FR 1550340
(43) Date de publication de la demande: 22.11.2017
(73) Titulaire: GERFLOR, 69100 Villeurbanne (FR)
(72) Inventeur: RIVAT, Alain, 69170 Les Sauvages (FR); METAYER, Sébastien, 42470 Saint Symphorien de Lay (FR); CEYSSON, OLivier, 84500 Bollene (FR)
(74) Mandataire: Cabinet Laurent & Charras
(86) Numéro de dépôt international: PCT/FR2016/050068
(87) Numéro de publication internationale: WO 2016/113508

(56) Documents cités:
- WO-A1-2016/083679
- WO-A1-2016/124825
- CA-A1- 2 596 470
- SU-A1- 814 655

## Description

### DOMAINE TECHNIQUE

La présente invention concerne le domaine technique du bâtiment et notamment des travaux de perçage de matériaux quelconques avec un outil à main, telle qu'une perceuse équipée d'un foret de perçage.

La présente invention concerne plus particulièrement un dispositif de rétention des résidus de poussières, ou de tout autre débris issus d'une opération de perçage, et un procédé de perçage d'une paroi mettant en oeuvre ledit dispositif de rétention.

L'invention trouve une application avantageuse, mais non limitative, dans la rétention des poussières issues d'une opération de perçage de toute surface et plus particulièrement d'un matériau amianté. En effet, sans sortir du cadre de l'invention dans la suite de la description le terme « paroi » peut être remplacé par le terme « surface » pour désigner l'emplacement sur lequel doit être effectuée l'opération de perçage.

### ART ANTERIEUR

Il est connu de l'état de la technique un dispositif de rétention des poussières issues d'une opération de perçage, se présentant sous la forme d'une capsule en plastique transparent, comprenant une enveloppe définissant un volume destiné à la réception desdites poussières.

Plus précisément, ladite capsule comprend une face arrière, destinée à être plaquée contre une paroi à percer, et une face avant opposée et destinée à recevoir en appui et à être traversée par un foret de perçage pour l'opération de perçage en tant que telle.

Pour réaliser l'opération de perçage, le foret, mus en rotation, perce et traverse successivement les faces avant et arrière de la capsule pour percer ensuite la paroi. La capsule reste plaquée contre la paroi, et les poussières issues de l'opération de perçage, évacuées généralement le long du foret, se retrouvent emprisonnées dans le volume de ladite capsule.

Avantageusement, la paroi arrière de ce type de capsule comprend des moyens adhésifs pour maintenir ladite capsule contre la paroi à percer, et laisser libres les mains d'un utilisateur effectuant l'opération de perçage.

Ce type de capsule de rétention donne un résultat grossier, plutôt satisfaisant pour des petits travaux de perçage. En effet, l'étanchéité entre la capsule et la paroi à percer n'est pas optimale de sorte que des fuites de poussières se produisent lors du perçage. De plus l'étanchéité entre le foret de perçage et la capsule percée n'est pas non plus optimale et entraine aussi des fuites de poussières.

Ainsi, ce type de capsule est acceptable pour de petits travaux de bricolage. Cependant, du fait des fuites résiduelles, ce type de capsule n'est pas adapté lorsqu'il s'agit de percer des matériaux à base de produits toxiques ou cancérigènes, telle que de l'amiante par exemple.

Un dispositif de rétention des poussières issues d'une opération de perçage selon le préambule de la revendication 1 est divulgué dans le document SU 814 655 A1

### EXPOSE DE L'INVENTION

Ainsi donc, l'invention vise à fournir un dispositif de rétention des poussières issues d'une opération de perçage permettant de retenir d'une manière optimale et sans fuite lesdites poussières.

Un autre objectif de l'invention est fournir un tel dispositif de rétention des poussières qui permette de réaliser des perçages sur des produits amiantés, d'une manière saine, sécuritaire et rapide.

Afin de résoudre les problèmes précités, il a été mis au point un dispositif de rétention des poussières issues d'une opération de perçage, comprenant une enveloppe fermée, de préférence transparente à la lumière et définissant un volume destiné à la réception desdites poussières. L'enveloppe comprend une face arrière destinée à être plaquée contre une paroi à percer, et une face avant opposée à ladite face arrière, destinée à être traversée par un foret de perçage pour l'opération de perçage en tant que telle.

Selon l'invention, l'enveloppe renferme un gel, de préférence transparent à la lumière, et apte, par la rotation du foret de perçage, à être mélangé avec les poussières issues de l'opération de perçage.

Par gel, on entend un produit, principalement constitué de liquide, mais qui se comporte comme un solide, à savoir qui ne présente aucun écoulement lorsqu'il est à l'état stable.

De cette manière, pour réaliser l'opération de perçage, le dispositif de rétention est positionné de sorte à ce que sa face arrière soit plaquée contre la paroi à percer. Le fait que la capsule et le gel sont, d'une manière avantageuse, transparents permet de faciliter le positionnement et le centrage du dispositif de rétention par rapport au perçage à réaliser. Un foret d'une perceuse prend ensuite en appui contre la face avant et entame l'opération de perçage par rotation. Ainsi, le foret perce et traverse la face avant de l'enveloppe du dispositif, traverse ensuite le gel et l'entraine au moins en partie en rotation, et enfin perce et traverse la face arrière de l'enveloppe pour réaliser le perçage de la paroi proprement dite.

Les poussières issues du perçage remontent alors le long du foret de perçage et viennent, sans fuite, s'emprisonner dans le gel en se mélangeant à celui-ci. L'étanchéité entre le dispositif de rétention et le foret de perçage est optimale. Le dispositif selon l'invention permet ainsi le perçage d'un matériau amianté en toute sécurité, d'une manière saine et rapide.

Pour faciliter l'utilisation du dispositif de rétention selon l'invention, celui-ci comprend une couche adhésive agencée sur la face arrière pour permettre la fixation dudit dispositif sur la paroi à percer.

Pour améliorer davantage l'étanchéité entre la paroi à percer et le dispositif de rétention selon l'invention, la face arrière de l'enveloppe comprend une ouverture, adaptée aux dimensions du perçage à réaliser, et obturée par un opercule pelable, de préférence réalisé dans une matière transparente à la lumière.

De cette manière, l'opercule est retiré avant le positionnement du dispositif de rétention contre la paroi à percer. L'opercule retiré laisse apparaitre une ouverture, par exemple circulaire, dans la face arrière de l'enveloppe. Pour réaliser le perçage, la face arrière de l'enveloppe est plaquée contre la paroi à percer de telle sorte que l'ouverture dans la face arrière coïncide et communique avec le perçage à réaliser. Ainsi, le perçage à réaliser est en communication directe avec le volume interne du dispositif et le gel, de sorte que lors du perçage, l'étanchéité entre le dispositif de rétention et la paroi à percer est optimale. Les risques de fuite de poussières sont supprimés.

D'une manière plus avantageuse, après le retrait de l'opercule, du gel vient directement en contact contre la paroi à percer lorsque que le dispositif est plaqué contre ladite paroi, de sorte que l'étanchéité est accrue.

Selon une forme de réalisation particulière du dispositif de rétention selon l'invention, l'opercule pelable est agencé sur la couche adhésive. La couche adhésive comprend une ouverture en correspondance avec l'ouverture de la face arrière, et la face de la couche adhésive en contact avec l'enveloppe comprend une force d'adhérence supérieure à celle de la face en contact avec l'opercule, de sorte à demeurer sur la face arrière de l'enveloppe après le retrait de l'opercule pelable et permettre la fixation dudit dispositif sur la paroi à percer.

De préférence, le dispositif de rétention comprend des moyens de centrage de la capsule par rapport au perçage à réaliser.

Selon l'invention, le dispositif de rétention comprend des moyens de guidage du foret de perçage.

Selon l'invention, les moyens de centrage et les moyens de guidage se présentent sous la forme d'un évidement réalisé dans la face avant de l'enveloppe, apte d'une part, à recevoir et à guider un foret de perçage et, d'autre part, à permettre le centrage du dispositif par l'alignement de l'évidement avec le perçage à réaliser.

Selon une forme de réalisation particulière, l'enveloppe est tronconique et comprend avantageusement un bourrelet périphérique annulaire ménagé du côté de la face avant de sorte à éviter, lors du perçage, la remontée directe des poussières. En effet la forme arrondie du bourrelet permet de ramener les poussières vers le centre du volume du dispositif de rétention, et évite ainsi les risques de fuites.

Selon une forme de réalisation particulière, le dispositif selon l'invention comprend une rondelle agencée transversalement à l'intérieur de l'enveloppe pour cloisonner le gel et l'empêcher de s'épandre hors du volume lorsque le foret est retiré.

Selon une autre forme de réalisation, l'enveloppe est divisée en deux volumes par une membrane disposée transversalement et destinée à être traversée par le foret de perçage lors de l'opération de perçage, un premier volume du côté de la face arrière contient le gel et est destiné à la réception des poussières, et un deuxième volume contenant de l'air pour que du gel puisse s'y épandre lorsque le foret est retiré à l'issue de l'opération de perçage.

De préférence, un tampon de mousse est agencé sur la face arrière du dispositif pour assurer l'étanchéité entre la paroi à percer et le dispositif lorsque celui-ci est positionné contre la paroi.

L'invention vise également à fournir un procédé de perçage d'une paroi au moyen d'un foret mus en rotation. Selon l'invention, le procédé est remarquable en ce qu'il consiste à :
- positionner contre la paroi à percer un dispositif présentant une enveloppe fermée définissant un volume refermant un gel et comprenant une face arrière plaquée contre ladite paroi à percer, et une face avant opposée à la face arrière, le dispositif comprenant également des moyens de guidage du foret de perçage, sous la forme d'un évidement réalisé au sein de la face avant de l'enveloppe, apte à recevoir le foret de perçage,
- réaliser l'opération de perçage de sorte que le foret perce et traverse la face avant de l'enveloppe du dispositif, traverse ensuite le gel, et perce et traverse la face arrière de l'enveloppe jusqu'à réaliser le perçage de la paroi proprement dite.

Ainsi, les poussières issues de l'opération de perçage, évacuées le long du foret, se retrouvent mélangées avec le gel.

Lorsqu'il s'agit de percer un trou débouchant dans la paroi, le procédé comprend, avant l'étape consistant à réaliser le perçage, une étape consistant à positionner contre une face opposée de la paroi à percer et en regard du premier dispositif, un second dispositif présentant une enveloppe fermée définissant un volume refermant un gel et comprenant une face arrière plaquée contre ladite paroi à percer, et une face avant opposée à la face arrière, de sorte qu'après avoir traversé la paroi, le foret perce et traverse la face arrière de l'enveloppe du second dispositif pour finir sa course dans le gel de l'enveloppe du second dispositif.

Ainsi, les poussières issues de l'opération de perçage, évacuées le long du foret et par le trou débouchant, se retrouvent mélangées avec le gel présent dans les premier et second dispositifs.

Il est à noter que le second dispositif utilisé dans le procédé de perçage d'un trou débouchant dans une paroi reprend toutes les caractéristiques du dispositif selon l'invention. De façon alternative, la face avant de ce second dispositif peut être conçue pour éviter que le foret ne la traverse. En effet, lors de l'opération de perçage d'un trou débouchant dans la paroi, la face arrière de ce second dispositif est traversée par le foret de perçage mais il n'est pas pour autant souhaitable que le foret finisse sa course hors de l'enveloppe dudit second dispositif.

Selon une forme de réalisation préférée, la face arrière du second dispositif présente une surface plus importante que la surface de la face arrière du premier dispositif de manière à faciliter le positionnement du second dispositif dans l'axe de perçage. De préférence, la face arrière du second dispositif est circulaire et présente un diamètre compris entre 10 et 20 cm.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 est une représentation schématique d'un premier mode de réalisation, vu de côté, d'un dispositif de rétention selon l'invention ;
- la figure 2 est une représentation schématique d'un deuxième mode de réalisation du dispositif selon l'invention ;
- la figure 3 illustre une rondelle agencée à l'intérieur du dispositif selon l'invention ;
- la figure 4 est une représentation schématique d'un troisième mode de réalisation du dispositif selon l'invention.

### EXPOSE DETAILLE DE L'INVENTION

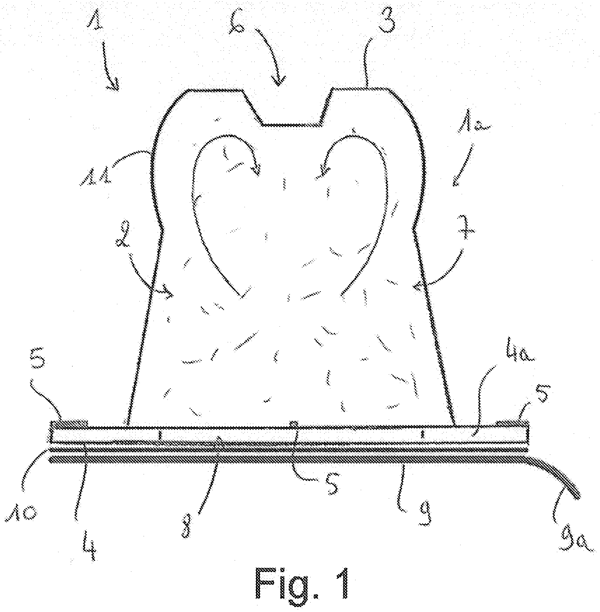

L'invention concerne, en référence aux figures 1 à 4, un dispositif (1) de rétention des poussières issues d'une opération de perçage.

Plus précisément, le dispositif (1) de rétention se présente sous la forme d'une capsule (la) en matière plastique, de préférence transparente à la lumière, et avantageusement de forme générale tronconique.

La capsule (la) comprend une enveloppe fermée de manière à définir un volume interne (2) de réception des poussières. La capsule (la) comprend, une face avant circulaire (3) et une face arrière (4), également circulaire, et formée par la grande base de la forme tronconique.

Le dispositif (1) selon l'invention est utilisé pour récupérer les poussières issues d'une opération de perçage. A cet effet, le perçage s'effectue au travers de ladite capsule (la).

La face arrière (4) comprend une collerette annulaire d'appui (4a) et est destinée à être plaquée contre une paroi à percer. Cette collerette (4a) comprend avantageusement une croix de centrage, c'est-à-dire quatre encoches ou plus généralement quatre indicateurs visuels (5) ménagés sur la périphérie de ladite collerette (4a) et régulièrement répartis autour de ladite collerette (4a). Cette croix de centrage permet de visualiser le centre de la face arrière (4) et de positionner correctement ladite face par rapport au perçage à réaliser.

La face avant (3) de la capsule (la) comprend un évidement (6), de préférence circulaire ou tronconique, centré et apte d'une part, à recevoir en appui et à guider un foret de perçage et, d'autre part, à permettre le centrage du dispositif (1) par l'alignement de l'évidement (6) avec le perçage à réaliser. L'évidement (6) est aussi, de fait, centré par rapport à la croix de centrage de la collerette (4a).

Pour récupérer d'une manière optimale les poussières, la capsule (la) renferme un produit se présentant sous la forme d'un gel (7), tel que par exemple un gel échographique, à base d'eau, de glycol-polyacrylate, et de préservatifs. Le gel (7) peut être de tout type approprié, l'essentiel réside dans le fait qu'il soit apte à être mélangé aux poussières issues d'une opération de perçage. Le gel (7) comprend avantageusement du silicone ou de la graisse pour résister à l'élévation de la température du foret lors de l'opération de perçage.

Le gel (7) est un fluide non newtonien, principalement constitué de liquide, se comportant comme un solide, à savoir qui ne présente aucun écoulement lorsqu'il est à l'état stable.

La face arrière (4) de la capsule (la) comprend une ouverture circulaire (8), centrée et adaptée aux dimensions du perçage à réaliser. L'ouverture (8) est notamment plus grande que le perçage à réaliser, et est obturée par un opercule pelable (9), de préférence en matière transparente à la lumière.

L'opercule (9) comprend une languette périphérique (9a) pour faciliter son retrait. Il est maintenu sur la face arrière (4) de la capsule (la) par l'intermédiaire d'une couche adhésive (10), comprenant une ouverture en correspondance avec l'ouverture (8) de la face arrière (4), dont la force d'adhérence du côté capsule (la) est supérieure à la force d'adhérence du côté opercule (9).

Ainsi, lorsque l'opercule (9) est pelé et retiré, la couche adhésive (10) demeure sur la face arrière (4) de la capsule (la) et permet la fixation et le maintien de la capsule (la) sur la paroi à percer.

De cette manière, pour réaliser l'opération de perçage, l'opercule (9) est retiré en tirant sur la languette (9a), et la capsule (la) est positionnée de sorte à venir plaquer la face arrière (4) de son enveloppe contre la paroi à percer. L'opercule (9) est centré par rapport au perçage à réaliser par l'intermédiaire de la croix de centrage et/ou de l'évidement (6) de la face avant (3). La couche adhésive (10) maintient la capsule (la) contre la paroi à percer.

Le foret d'une perceuse vient ensuite dans l'évidement (6) de centrage et de guidage, en appui contre la face avant (3) et entame l'opération de perçage. Ainsi, le foret perce et traverse la face avant (3) de l'enveloppe de la capsule (la), traverse ensuite le gel (7) et l'entraine au moins en partie en rotation, et enfin traverse la face arrière (4) par l'ouverture (8) pour réaliser le perçage de la paroi proprement dite.

Lorsqu'il s'agit de percer un trou débouchant dans la paroi, il convient, avant de réaliser le perçage, de positionner contre une face opposée de la paroi à percer et en regard du premier dispositif (1), un second dispositif (1) identique, de sorte qu'après avoir traversé la paroi, le foret perce et traverse la face arrière (4) de l'enveloppe du second dispositif pour finir sa course dans le gel de l'enveloppe du second dispositif.

Ainsi, les poussières issues de l'opération de perçage, évacuées le long du foret et par le trou débouchant, se retrouvent mélangées avec le gel (7) présent dans les premier et second dispositifs.

L'étanchéité entre la capsule (la) et la paroi à percer, ainsi qu'entre la capsule (la) et le foret de perçage, est optimale. Les poussières issues du perçage remontent alors le long du foret de perçage et viennent, sans fuite, s'emprisonner dans le gel (7) en se mélangeant à celui-ci.

D'une manière avantageuse, l'enveloppe comprend un bourrelet périphérique annulaire (11) ménagé du côté de la face avant (3) de sorte à éviter, lors du perçage, la remontée directe des poussières. En effet la forme arrondie du bourrelet (11) permet de ramener les poussières vers le centre du volume (2) de la capsule (la), et évite ainsi les risques de fuites.

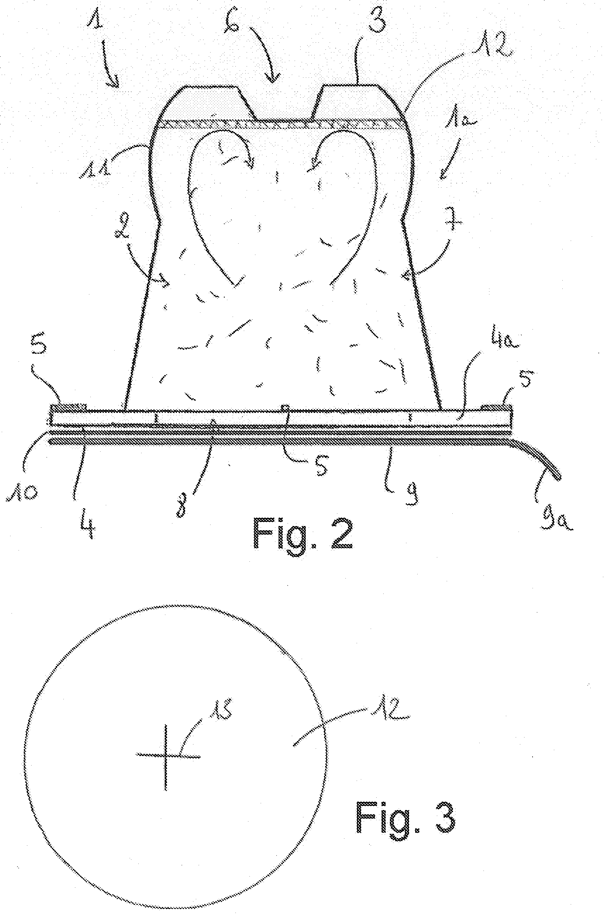

D'une manière avantageuse, et en référence à la figure 2, le dispositif de rétention (1) comprend une rondelle (12) agencée transversalement à l'intérieur de l'enveloppe, et de préférence en contact avec la face avant (3) du dispositif. La rondelle est par exemple réalisée en Polyuréthane ou en silicone et permet de guider le foret tout en empêchant le gel de s'épandre hors du volume (2) lorsque le foret est retiré.

En référence à la figure 3, la rondelle comprend avantageusement une croix de centrage (13) formée par exemple par quatre encoches ménagées dans l'épaisseur de la rondelle (12). Cette croix (13) permet de créer une ouverture temporaire permettant le passage du foret et se refermant lorsque le foret est retiré à l'issue de l'opération de perçage.

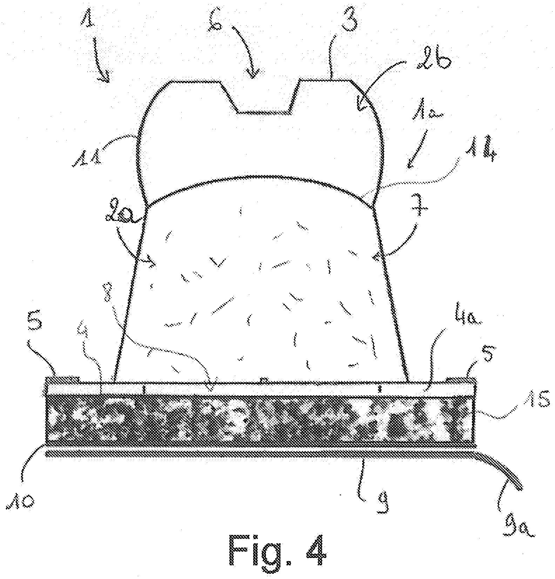

Selon une autre forme de réalisation, et en référence à la figure 4, l'enveloppe est divisée en deux volumes (2a, 2b) par une membrane (14) disposée transversalement et destinée à être traversée par le foret de perçage lors de l'opération de perçage. Un premier volume (2a) du côté de la face arrière contient le gel (7) et est destiné à la réception des poussières. Un deuxième volume (2b) contient de l'air et suffisamment gros pour qu'une petite quantité de gel puisse s'y épandre lorsque le foret est retiré à l'issue de l'opération de perçage. De cette manière le gel (7) éventuellement emporté par le mouvement du foret vient s'épandre dans le deuxième volume (2b), évitant la libération des poussières capturées dans le gel hors de l'enveloppe.

Toujours en référence à la figure 4, un tampon de mousse (15) peut être agencé sur la face arrière (4), avantageusement entre l'ouverture (8) et l'opercule pelable (9), pour obturer ladite ouverture (8). Ce tampon de mousse (15) permet d'améliorer l'étanchéité de la liaison entre la paroi à percer et le dispositif lorsque celui-ci est positionné contre la paroi. A cet effet, le tampon de mousse (15) est suffisamment souple pour corriger des défauts de planéité ou de rugosité de ladite paroi. Le tampon de mousse (15) permet également d'assurer l'étanchéité lors d'une opération de perçage dans une rainure de largeur inférieure à la surface de la face arrière, notamment sur des opérations de perçage de nez de marche.

Le tampon de mousse (15) est avantageusement réalisé en mousse Polyéthylène ou Polypropylène de faible densité. D'une façon alternative, le tampon de mousse (15) n'est pas solidaire du dispositif de manière à pouvoir être disposé indépendamment du dispositif sur la paroi à percer, le dispositif étant par la suite disposé sur le tampon de mousse pour l'opération de perçage. Avantageusement, le tampon de mousse peut présenter une couche adhésive (10).

D'une manière avantageuse, la face arrière du dispositif présente un plan concave ou convexe de manière à faciliter sa disposition sur des parois ondulées. De telles parois sont par exemples des canalisations ou des plaques de toitures ondulées. Avantageusement la face arrière est également suffisamment souple pour se déformer et améliorer l'étanchéité lorsque le dispositif est disposé sur une paroi ondulée dont la courbure diffère légèrement de la courbure de la face arrière du dispositif.

D'une manière avantageuse, la distance entre la face avant (3) et la face arrière (4) du dispositif est inférieure ou égale à 50 mm, de préférence inférieure ou égale à 35 mm. De cette manière, la plupart des opérations de perçage peuvent être réalisées avec des forets conventionnels sans risquer que le mandrin de la perceuse utilisée vienne en contact voire traverse l'enveloppe du dispositif. Des opérations de perçage classiques consistent notamment à la réalisation d'un trou destiné à recevoir une cheville d'ancrage de 20 à 50 mm de longueur. Ces opérations sont généralement réalisées à l'aide d'un foret d'une longueur inférieure à 110 mm.

Ainsi, il ressort de ce qui précède que l'invention propose un dispositif (1) de rétention de poussières permettant d'effectuer des opérations de perçage d'un matériau amianté en toute sécurité, d'une manière saine, simple et rapide, aussi bien sur des parois verticales qu'horizontales, sans émettre de fibres d'amiantes. Cette capsule (la) permet alors de s'affranchir de toute mesure de sécurité lourde, tel que par exemple le port d'une combinaison étanche et d'un masque respiratoire.

Lorsque le perçage est effectué, les résidus d'amiantes sont emprisonnés dans le gel (7) de la capsule (la), et celle-ci peut être facilement traitée comme déchet amianté.

## Revendications

1. Dispositif (1) de rétention des poussières issues d'une opération de perçage, comprenant une enveloppe fermée définissant un volume (2) destiné à la réception desdites poussières, ladite enveloppe comprenant une face arrière (4) destinée à être plaquée contre une paroi à percer, et une face avant (3) opposée à la face arrière (4), destinée à être traversée par un foret de perçage pour l'opération de perçage en tant que telle, l'enveloppe renferme un gel (7) apte, par la rotation du foret de perçage, à être mélangé avec les poussières issues de l'opération de perçage, ***caractérisé en ce que*** le dispositif comprend des moyens (6) de guidage du foret de perçage, sous la forme d'un évidement (6) réalisé au sein de la face avant (3) de l'enveloppe, apte à recevoir et à guider le foret de perçage.

2. Dispositif (1) de rétention des poussières selon la revendication 1, ***caractérisé* en ce que** l'enveloppe (la) et le gel sont transparents à la lumière.

3. Dispositif (1) de rétention des poussières selon l'une des revendications 1 et 2, ***caractérisé* en ce qu'**il comprend une couche adhésive (10) agencée sur la face arrière (4) pour permettre la fixation dudit dispositif (1) sur la paroi à percer.

4. Dispositif (1) de rétention des poussières selon l'une des revendications 1 à 3, ***caractérisé* en ce que** la face arrière (4) de l'enveloppe comprend une ouverture (8), adaptée aux dimensions du perçage à réaliser, et obturée par un opercule pelable (9).

5. Dispositif (1) de rétention des poussières selon la revendication 4, ***caractérisé* en ce que** l'opercule (9) est transparent à la lumière.

6. Dispositif (1) de rétention des poussières selon l'une des revendications 4 et 5, ***caractérisé* en ce que** l'opercule pelable (9) est agencé sur la couche adhésive (10), ladite couche adhésive (10) comprenant une ouverture en correspondance avec l'ouverture (8) de la face arrière (4), et la face de la couche adhésive (10) en contact avec l'enveloppe comprend une force d'adhérence supérieure à celle de la face en contact avec l'opercule (9), de sorte à demeurer sur la face arrière (4) de l'enveloppe après le retrait de l'opercule pelable (9) et permettre la fixation dudit dispositif (1) sur la paroi à percer.

7. Dispositif (1) de rétention des poussières selon l'une quelconque des revendications précédentes, ***caractérisé* en ce qu'**il comprend des moyens de centrage (5, 6) par rapport au perçage à réaliser.

8. Dispositif (1) de rétention des poussières selon la revendication 7, ***caractérisé* en ce que** les moyens de centrage se présentent sous la forme d'un évidement (6) réalisé au sein de la face avant (3) de l'enveloppe, apte à recevoir et à centrer le dispositif (1) par l'alignement de l'évidement (6) avec le perçage à réaliser.

9. Dispositif (1) de rétention des poussières selon l'une quelconque des revendications précédentes, ***caractérisé* en ce que** l'enveloppe est tronconique et comprend un bourrelet périphérique annulaire (11) ménagé du côté de la face avant (3).

10. Dispositif (1) de rétention des poussières selon l'une quelconques des revendications précédentes, ***caractérisé* en ce qu'**il comprend une rondelle (12) agencée transversalement à l'intérieur de l'enveloppe pour cloisonner le gel (7) et l'empêcher de s'épandre hors du volume (2) lorsque le foret est retiré.

11. Dispositif (1) de rétention des poussières selon l'une quelconque des revendications 1 à 9, ***caractérisé* en ce que** l'enveloppe est divisée en deux volumes (2a, 2b) par une membrane (14) disposée transversalement et destinée à être traversée par le foret de perçage lors de l'opération de perçage, un premier volume (2a) du côté de la face arrière contient le gel (7) et est destiné à la réception des poussières, et un deuxième volume (2b) contenant de l'air pour que du gel puisse s'y épandre lorsque le foret est retiré à l'issue de l'opération de perçage.

12. Dispositif (1) de rétention des poussières selon l'une quelconque des revendications précédentes, ***caractérisé* en ce qu'**un tampon de mousse (15) est agencé sur la face arrière (4) pour assurer l'étanchéité entre la paroi à percer et le dispositif lorsque celui-ci est positionné contre la paroi.

13. Procédé de perçage d'une paroi au moyen d'un foret mus en rotation ***caractérisé* en ce qu'**il consiste à :
- positionner contre la paroi à percer un dispositif (1) présentant une enveloppe fermée définissant un volume (2) refermant un gel (7) et comprenant une face arrière (4) plaquée contre ladite paroi à percer, et une face avant (3) opposée à la face arrière (4), le dispositif comprenant également des moyens (6) de guidage du foret de perçage, sous la forme d'un évidement (6) réalisé au sein de la face avant (3) de l'enveloppe, apte à recevoir et à guider le foret de perçage,
- réaliser l'opération de perçage de sorte que le foret, guidé par l'évidement (6),perce et traverse la face avant (3) de l'enveloppe du dispositif (1), traverse ensuite le gel (7), et perce et traverse la face arrière (4) de l'enveloppe jusqu'à réaliser le perçage de la paroi.

14. Procédé selon la revendication 13, ***caractérisé* en ce qu'**il comprend, avant l'étape consistant à réaliser le perçage, une étape consistant à positionner contre une face opposée de la paroi à percer et en regard du premier dispositif (1), un second dispositif (1) présentant une enveloppe fermée définissant un volume (2) refermant un gel (7) et comprenant une face arrière (4) plaquée contre ladite paroi à percer, et une face avant (3) opposée à la face arrière (4), de sorte qu'après avoir traversé la paroi, le foret perce et traverse la face arrière (4) de l'enveloppe du second dispositif (1) pour finir sa course dans le gel (7) de l'enveloppe du second dispositif.

## Patentansprüche

1. Vorrichtung (1) zum Zurückhalten von Staub, der aus einem Bohrvorgang resultiert, mit einem geschlossenen Beutel, welcher ein Volumen (2) definiert, das zur Aufnahme des Staubs bestimmt ist, wobei der Beutel eine Rückseite (4) umfasst, die dazu bestimmt ist, gegen eine zu bohrende Wand gedrückt zu werden, und eine Vorderseite (3) gegenüber der Rückseite (4) umfasst, die dazu bestimmt ist, von einem Bohrer für den Bohrvorgang als solchen durchdrungen zu werden, wobei der Beutel ein Gel (7) enthält, das durch Drehen des Bohrers mit dem aus dem Bohrvorgang resultierenden Staub vermischt werden kann, **dadurch gekennzeichnet, dass** die Vorrichtung Mittel (6) zum Führen des Bohrers in Form einer Aussparung (6) innerhalb der Vorderseite (3) des Beutels umfasst, die den Bohrer aufnehmen und führen können.

2. Vorrichtung (1) zum Zurückhalten von Staub nach Anspruch 1, **dadurch gekennzeichnet, dass** der Beutel (1a) und das Gel lichtdurchlässig sind.

3. Vorrichtung (1) zum Zurückhalten von Staub nach einem der Ansprüche 1 und 2, **dadurch gekennzeichnet, dass** die Vorrichtung eine an der Rückseite (4) angeordnete Haftschicht (10) umfasst, um ein Befestigen der Vorrichtung (1) an der zu bohrenden Wand zu ermöglichen.

4. Vorrichtung (1) zum Zurückhalten von Staub nach einem der Ansprüche 1 bis 3, **dadurch gekennzeichnet, dass** die Rückseite (4) des Beutels eine Öffnung (8) aufweist, die an die Abmessungen der zu fertigenden Bohrung angepasst und durch eine abziehbare Trennschicht (9) verschlossen ist.

5. Vorrichtung (1) zum Zurückhalten von Staub nach Anspruch 4, **dadurch gekennzeichnet, dass** die Trennschicht (9) lichtdurchlässig ist.

6. Vorrichtung (1) zum Zurückhalten von Staub nach einem der Ansprüche 4 und 5, **dadurch gekennzeichnet, dass** die abziehbare Trennschicht (9) auf der Haftschicht (10) angeordnet ist, wobei die Haftschicht (10) eine Öffnung entsprechend der Öffnung (8) der Rückseite (4) aufweist, und die Fläche der Haftschicht (10) in Kontakt mit dem Beutel eine Adhäsionskraft aufweist, die größer ist als die der Fläche in Kontakt mit der Trennschicht (9), um nach dem Entfernen der abziehbaren Trennschicht (9) auf der Rückseite (4) des Beutels zu verbleiben und ein Befestigen der Vorrichtung (1) an der zu bohrenden Wand zu ermöglichen.

7. Vorrichtung (1) zum Zurückhalten von Staub nach einem der vorhergehenden Ansprüche, **dadurch gekennzeichnet, dass** die Vorrichtung Zentriermittel (5, 6) in Bezug auf die zu fertigende Bohrung umfasst.

8. Vorrichtung (1) zum Zurückhalten von Staub nach Anspruch 7, **dadurch gekennzeichnet, dass** es sich bei den Zentriermitteln um eine Aussparung (6) handelt, die innerhalb der Vorderseite (3) des Beutels ausgebildet ist und in der Lage ist, die Vorrichtung (1) aufzunehmen und zu zentrieren, indem die Aussparung (6) mit der zu fertigenden Bohrung ausgerichtet wird.

9. Vorrichtung (1) zum Zurückhalten von Staub nach einem der vorhergehenden Ansprüche, **dadurch gekennzeichnet, dass** der Beutel kegelstumpfförmig ist und eine umlaufende Ringwulst (11) auf der Vorderseite (3) aufweist.

10. Vorrichtung (1) zum Zurückhalten von Staub nach einem der vorhergehenden Ansprüche, **dadurch gekennzeichnet, dass** die Vorrichtung eine Scheibe (12) umfasst, die innerhalb des Beutels quer angeordnet ist, um das Gel (7) zu isolieren und zu verhindern, dass es beim Entfernen des Bohrers aus dem Volumen (2) ausläuft.

11. Vorrichtung (1) zum Zurückhalten von Staub nach einem der Ansprüche 1 bis 9, **dadurch gekennzeichnet, dass** der Beutel durch eine quer angeordnete, vom Bohrer während des Bohrvorgangs zu durchdringende Membran (14) in zwei Volumen (2a, 2b) unterteilt ist, wobei ein erstes Volumen (2a) auf der Rückseite das Gel (7) enthält und zur Staubaufnahme bestimmt ist, und ein zweites Volumen (2b) Luft enthält, damit sich das Gel dort ausbreiten kann, wenn der Bohrer nach dem Bohrvorgang entfernt wird.

12. Vorrichtung (1) zum Zurückhalten von Staub nach einem der vorhergehenden Ansprüche, **dadurch gekennzeichnet, dass** auf der Rückseite (4) ein Schaumstoffpolster (15) angeordnet ist, um eine Abdichtung zwischen der zu bohrenden Wand und der Vorrichtung zu gewährleisten, wenn diese gegen die Wand positioniert ist.

13. Verfahren zum Bohren einer Wand mittels eines rotierend angetriebenen Bohrers, **dadurch gekennzeichnet, dass** das Verfahren aus folgenden Schritten besteht:
- Positionieren gegen die zu bohrende Wand einer Vorrichtung (1) mit einem geschlossenen Beutel, das ein Volumen (2) definiert, welches ein Gel (7) umschließt und eine gegen die zu bohrende Wand gedrückte Rückseite (4) und eine der Rückseite (4) gegenüberliegende Vorderseite (3) aufweist, wobei die Vorrichtung auch Mittel (6) zum Führen des Bohrers in Form einer Aussparung (6) innerhalb der Vorderseite (3) des Beutels umfasst, die in der Lage sind, den Bohrer aufzunehmen und zu führen,
- Durchführen des Bohrvorgangs, so dass der durch die Aussparung (6) geführte Bohrer bohrt und die Vorderseite (3) des Beutels der Vorrichtung (1) durchdringt, dann das Gel (7) durchdringt und die Rückseite (4) des Beutels bohrt und durchdringt, bis die Wand gebohrt ist.

14. Verfahren nach Anspruch 13, **dadurch gekennzeichnet, dass** das Verfahren vor dem Bohrschritt einen Schritt zum Positionieren gegen eine der zu bohrenden Wand gegenüberliegenden Fläche und der ersten Vorrichtung (1) zugewandt eine zweite Vorrichtung (1) mit einem geschlossenen Beutel umfasst, welcher ein Volumen (2) definiert, das ein Gel (7) umschließt, und eine Rückseite (4) umfasst, die gegen die zu bohrende Wand gedrückt wird, und eine der Rückseite (4) gegenüberliegende Vorderseite (3) umfasst, so dass der Bohrer nach dem Durchdringen der Wand die Rückseite (4) des Beutels der zweiten Vorrichtung (1) durchbohrt und durchdringt, um seinen Weg im Gel (7) des Beutels der zweiten Vorrichtung zu beenden.

## Claims

1. Device (1) for retaining dust created by a drilling operation, comprising a closed envelope defining a space (2) for receiving said dust, said envelope comprising a rear face (4) for applying to a wall to be drilled, and a front face (3) opposite the rear face (4), through which a drill bit penetrates for the actual drilling operation, the envelope contains a gel (7) suitable for being mixed, by the rotation of the drill bit, with the dust from the drilling operation, ***characterized* in that** the device (1) comprises means (6) for guiding the drill bit, in the form of a recess (6) formed within the front face (3) of the envelope, suitable for receiving and guiding the drill bit.

2. The device (1) for retaining dust according to claim 1, ***characterized* in that** the envelope (1a) and the gel are transparent to light.

3. The device (1) for retaining dust according to one of the claims 1 and 2, ***characterized* in that** it comprises an adhesive layer (10) arranged on the rear face (4) thereof to enable the attachment of said device (1) to the wall to be drilled.

4. The device (1) for retaining dust according to one of claims 1 to 3, ***characterized* in that** the rear face (4) of the envelope comprises an opening (8), adapted to the dimensions of the hole to be made, and sealed by means of a peelable seal (9).

5. The device (1) for retaining dust according to claim 4, ***characterized* in that** the seal (9) is transparent to light.

6. The device (1) for retaining dust according to one of claims 4 and 5, ***characterized* in that** the peelable seal (9) is arranged on the adhesive layer (10), said adhesive layer (10) comprising an opening (8) corresponding to the opening of the rear face (4), and the face of the adhesive layer (10) in contact with the envelope comprises a greater adhesive force than the face in contact with the seal (9), in such a way as to remain on the rear face (4) of the envelope after removal of the peelable seal (9) and to allow the attachment of said device (1) to the wall to be drilled.

7. The device (1) for retaining dust according to any of the preceding claims, ***characterized* in that** it includes centering means (5, 6) in relation to the hole to be made.

8. The device (1) for retaining dust according to claim 7, ***characterized* in that** the centering means are in the form of a recess (6) formed within the front face (3) of the envelope, suitable for receiving and centering the drill bit by aligning the recess (6) with the hole to be made..

9. The device (1) for retaining dust according to any of the preceding claims, ***characterized* in that** the envelope is tapered and comprises an annular peripheral bead (11) arranged on the side of the front face (3).

10. The device (1) for retaining dust according to any of the preceding claims, ***characterized* in that** it comprises a washer (12) arranged transversely within the envelope in order to partition the gel (7) and prevent it from spreading out of the space (2) when the drill bit is removed.

11. The device (1) for retaining dust according to any one of claims 1 to 9, ***characterized* in that** the envelope is divided into two spaces (2a, 2b) by a membrane (14) arranged transversely and through which a drill bit penetrates during the drilling operation, a first space (2a) on the side of the rear face contains the gel (7) and is intended for receiving the dust and a second space (2b) containing air such that the gel can spread therein when the drill bit is removed at the end of the drilling operation.

12. The device (1) for retaining dust according to any of the preceding claims, ***characterized* in that** a foam pad (15) is arranged on the rear face (4) in order to guarantee sealing between the wall to be drilled and the device when it is positioned against the wall.

13. A method for the drilling of a wall by means of a drill bit in rotation ***characterized* in that** it consists in:
- the positioning against the wall to be drilled of a device (1) having a closed envelope defining a space (2) enclosing a gel (7) and comprising a rear face (4) applied to said wall to be drilled and a front face (3) opposite the rear face (4), the device (1) comprises also means (6) for guiding the drill bit, in the form of a recess (6) formed within the front face (3) of the envelope, suitable for receiving and guiding the drill bit,
- performing the drilling operation in such a way that the drill bit, guided by the recess (6), pierces and penetrates the front face (3) of the envelope of the device (1), then penetrates the gel (7), and pierces and penetrates the rear face (4) of the envelope in order to drill into the wall.

14. The method according to claim 13, **characterized in that** it comprises, prior to the step of performing the drilling, a step consisting in positioning against an opposite face of the wall to be drilled and facing the first device (1), a second device (1) having a closed envelope defining a space (2) enclosing a gel (7) and comprising a rear face (4) applied to said wall to be drilled and a front face (3) opposite the rear face (4) such that after penetrating the wall, the drill bit pierces and penetrated the rear face (4) of the envelope of the second device (1) ending the travel thereof within the gel (7) of the envelope of the second device.
